(19) Europäisches Patentamt
European Patent Office
Office européen des brevets

(11) **EP 2 455 927 A1**

(12) **EUROPEAN PATENT APPLICATION**
published in accordance with Art. 153(4) EPC

(43) Date of publication:
**23.05.2012 Bulletin 2012/21**

(51) Int Cl.:
***G08G 1/16*** *(2006.01)*

(21) Application number: **10799548.2**

(22) Date of filing: **26.04.2010**

(86) International application number:
**PCT/JP2010/002980**

(87) International publication number:
**WO 2011/007484 (20.01.2011 Gazette 2011/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.07.2009 JP 2009169119**

(71) Applicant: **Panasonic Corporation
Kadoma-shi
Osaka 571-8501 (JP)**

(72) Inventors:
• **WAKI, Yuki
Chuo-ku, Osaka 540-6207 (JP)**
• **NOGAMI, Tateaki
Chuo-ku, Osaka 540-6207 (JP)**
• **IWAI, Kazuhiko
Chuo-ku, Osaka 540-6207 (JP)**

(74) Representative: **Grünecker, Kinkeldey,
Stockmair & Schwanhäusser
Leopoldstrasse 4
80802 München (DE)**

(54) **DRIVING SUPPORT DEVICE, DRIVING SUPPORT METHOD, AND PROGRAM**

(57) Disclosed are a driving support device, a driving support method, and a program, which are capable of relieving driver's concern by making it possible to easily identify the travelling position of a vehicle in a lane. Specifically disclosed is a driving support device (100) which is provided with: a lane detection unit (120) for detecting the right and left ends of a lane on which a vehicle is travelling from a captured image; a vehicle position calculating unit (130) for calculating the displacement direction and displacement amount toward the lane width direction of the vehicle relative to the center of the lane on which the vehicle is travelling; and a display image generating unit (140) for generating a display image in which a vehicle image (330) is displaced in the center of the travelling lane from the position of a lane center marker (320) toward the lane width direction in accordance with the displacement direction and displacement amount that are calculated by the vehicle position calculating unit (130), and superimposed on a lane image composed of lane boundary markers (310) indicating the right and left ends of the lane and the lane center marker (320) indicating the center of the traveling lane.

FIG.1

EP 2 455 927 A1

## Description

Technical Field

The present invention relates to a driving support apparatus, driving support method, and program, and more particularly to a driving support apparatus and driving support method that provide a driver with information relating to the traveling position of a vehicle, and provide support so as to enable traveling in an appropriate position.

Background Art

In Patent Literature 1, a lane keeping support apparatus is disclosed that gives notification by changing the color of an image when a vehicle departs from a lane in which it is currently traveling or there is a possibility of such departure. The lane keeping support apparatus described in Patent Literature 1 displays an image indicating a vehicle and an image indicating left and right lane boundary lines on a display screen, offsets the image indicating the vehicle within the display screen according to the departure direction, provides blinking display of a lane boundary line in the departure direction, and gives notification by changing the color of an image indicating the vehicle according to the speed of travel in the departure direction.

In Patent Literature 2, a lane keeping support apparatus is disclosed that displays the situation around a traveling vehicle. The lane keeping support apparatus described in Patent Literature 2 identifies a lane in which a vehicle is traveling and also determines whether the vehicle is straddling lanes, and corrects the display position of a vehicle mark so that the vehicle also straddles lanes on the display screen if the vehicle is straddling lanes, or so that the vehicle does not straddle lanes on the display screen if the vehicle is not straddling lanes.

Citation List

Patent Literature

PTL 1
Japanese Patent Application Laid-Open No.11-126300
PTL 2
Japanese Patent Application Laid-Open No. 11-264868

Summary of Invention

Technical Problem

However, with the lane keeping support apparatus described in Patent Literature 1, notification is not given of a case in which a vehicle is traveling while deviating in a certain direction but not to the extent of departing from a lane, and it is difficult to support ascertainment of a vehicle's traveling position within a lane. In particular, a problem for a driver who does not have a feel for the width of the vehicle, such as an inexperienced driver, is the difficulty of judging what degree of evasion is appropriate in order to avoid contact with an oncoming vehicle or a vehicle parked at the side of the road.

Also, with the lane keeping support apparatus described in Patent Literature 2, although it is possible to ascertain whether a vehicle is traveling within a lane or is straddling lanes, it is still difficult to support a driver in a situation in which it is necessary to ascertain a vehicle's traveling position within a lane, such as when the vehicle is traveling while deviating in a certain direction but not to the extent of departing from a lane.

It is an object of the present invention to provide a driving support apparatus, driving support method, and program that enable a driver's judgment to be facilitated by making it possible to easily confirm the traveling position of a vehicle within a lane.

Solution to Problem

A driving support apparatus of the present invention employs a configuration having: an imaging section that images the surroundings of a vehicle; a lane detection section that detects the left and right edges of a traveling lane in which the vehicle is traveling from a captured image; a vehicle position calculation section that calculates a displacement direction and displacement amount of the vehicle in the lane width direction with respect to the center of the traveling lane; a display image generation section that generates a display image in which, in a lane image that includes lane boundary markers indicating the left and right edges of the traveling lane and a lane center marker indicating the center of the traveling lane, the center position of the vehicle image is superimposed displaced in the lane width direction from the position of the lane center marker in accordance with the displacement direction and displacement amount calculated by the vehicle position calculation section; and a display section that outputs the display image.

A driving support method has: a step of imaging the surroundings of a vehicle; a step of detecting the left and right edges of a traveling lane in which the vehicle is traveling from a captured image; a step of calculating a displacement direction and displacement amount of the vehicle in the lane width direction with respect to the center of the traveling lane; a display image generation step of generating a display image in which, in a lane image that includes lane boundary markers indicating the left and right edges of the traveling lane and a lane center marker indicating the center of the traveling lane, the center position of the vehicle image is superimposed displaced in the lane width direction from the position of the lane center marker in accordance with the displacement direction and displacement amount calculated by the calculation step; and a step of outputting a generated display image.

From another viewpoint, the present invention is a program that causes a computer to execute each step of the above-described driving support method.

Advantageous Effects of Invention

The present invention makes it possible to easily confirm the traveling position of a vehicle within a lane, thereby facilitating the judgment of a driver who does not have an adequate feel for the width of the vehicle, such as an inexperienced driver, as to whether there is sufficient margin of width to avoid an oncoming vehicle or a vehicle parked at the side of the road.

Brief Description of Drawings

FIG.1 is a block diagram showing the configuration of a driving support apparatus according to Embodiment 1 of the present invention;
FIG.2 is a drawing explaining a vehicle position calculation method of a driving support apparatus according to above Embodiment 1;
FIG.3 is a drawing explaining a display image generation method of a driving support apparatus according to above Embodiment 1;
FIG.4 is a drawing showing examples of display images in the case of a plurality of lanes generated by a display image generation section of a driving support apparatus according to above Embodiment 1;
FIG.5 is a drawing showing examples of display images generated by a display image generation section of a driving support apparatus according to above Embodiment 1;
FIG.6 is a drawing showing how a display image is displayed on a windshield by a display section of a driving support apparatus according to above Embodiment 1;
FIG.7 is a block diagram showing the configuration of a driving support apparatus according to Embodiment 2 of the present invention;
FIG.8 is a drawing showing a display image of a display section generated by a display image generation section of a driving support apparatus according to above Embodiment 2;
FIG.9 is a block diagram showing the configuration of a driving support apparatus according to Embodiment 3 of the present invention;
FIG. 10 is a drawing showing display images of a display section generated by a display image generation section of a driving support apparatus according to above Embodiment 3;
FIG.11 is a block diagram showing the configuration of a driving support apparatus according to Embodiment 4 of the present invention; and
FIG.12 is a drawing showing examples in which a display image of a display section generated by a driving support apparatus according to above Embodiment 4 cannot be correctly grasped.

Description of Embodiments

Now, embodiments of the present invention will be described in detail with reference to the accompanying drawings.

(Embodiment 1)

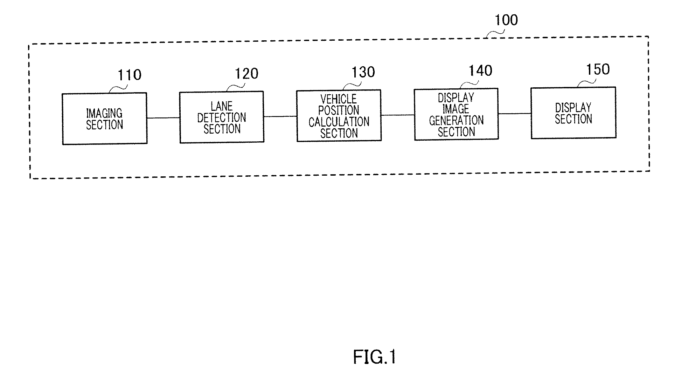

FIG.1 is a block diagram showing the configuration of a driving support apparatus according to Embodiment 1 of the present invention. The present embodiment is an example of application to a lane keeping support apparatus that provides information relating to a vehicle's traveling position to a driver, and provides support so as to enable traveling in an appropriate position.
As shown in FIG.1, lane keeping support apparatus 100 has a configuration that includes imaging section 110, lane detection section 120, vehicle position calculation section 130, display image generation section 140, and display section 150.
Imaging section 110 is a visible light or infrared light stereo camera that is positioned so as to image an area that includes at least the road surface of a lane in which a vehicle is traveling ahead of the vehicle, and that transfers a captured image to lane detection section 120. A CCD (Charge Coupled Device), CMOS (Complementary Metal Oxide Semiconductor), or suchlike image sensor is mainly used as an imaging method. When a wide-angle lens is used, in particular, distortion may occur in a captured image. Imaging section 110 also performs correction of such distortion.
Lane detection section 120 detects the left and right edges of a lane in which a vehicle is traveling (hereinafter referred to as "traveling lane") from a captured image. A lane includes one or a plurality of lanes. The left and right edges of a traveling lane may be a white line, side wall, or the like, and are detected using a known image recognition algorithm.
Vehicle position calculation section 130 calculates a displacement direction and displacement amount of a vehicle in the lane width direction with respect to the center of the traveling lane, based on a position in a captured image of the left and right edges of the traveling lane detected by lane detection section 120.
Display image generation section 140 generates a lane image that includes lane boundary markers indicating the left and right edges of the traveling lane and a lane center marker indicating the center of the traveling lane. Then display image generation section 140 generates a display image in which a vehicle image is positioned in the lane image with the center of the vehicle displaced according to the displacement direction and displacement amount in the lane width direction with respect to the center of the traveling lane of the vehicle calculated by vehicle position calculation section 130.

Display section 150 is a display that displays a composite image in front of the driver within the passenger compartment of a vehicle, and displays an image generated by display image generation section 140. Display section 150 is installed in a position in which it does not obstruct the driver's forward field of view. As for type, the display may be a liquid crystal display, an organic EL (Organic Electro-Luminescence) or suchlike light emitting display, a fluorescent tube display, a laser display, or an HUD (Head-Up Display) combining an optical system and combiner (a screen displaying a virtual and real image at the same distance) with any of these. A head-up display is installed so that an image is displayed on the windshield, for example.

The operation of lane keeping support apparatus 100 configured as described above will now be explained.

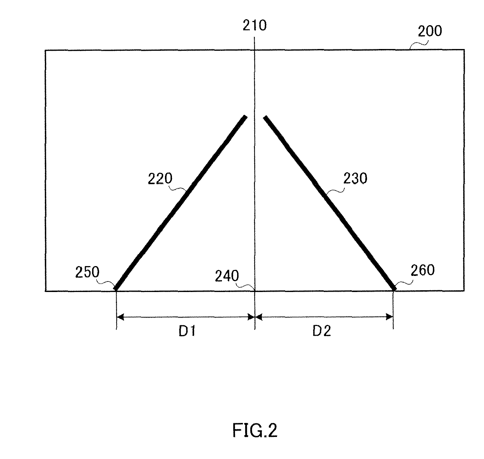

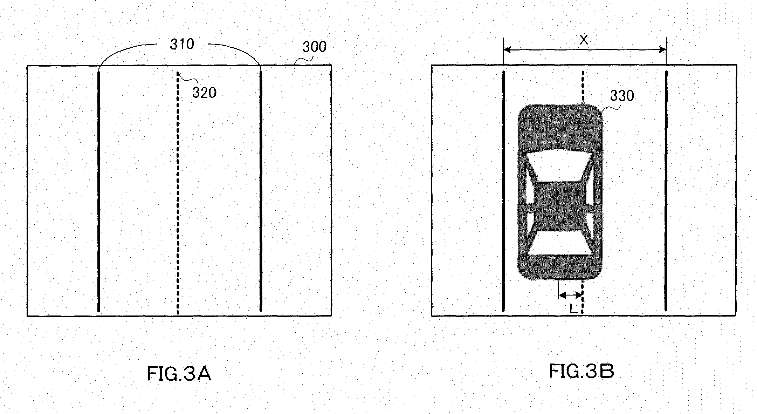

Using FIG.2 and FIG.3, a description will be given of a method whereby vehicle position calculation section 130 calculates a displacement direction and displacement amount of a vehicle in the lane width direction with respect to the center of the traveling lane, and a display image generation method.

FIG.2 is a drawing explaining a vehicle position calculation method of lane keeping support apparatus 100, and shows captured image 200 received by imaging section 110.

FIG.3 is a drawing explaining a display image generation method of lane keeping support apparatus 100.

First, vehicle position calculation section 130 finds center line 210 in captured image 200 indicating the center of the vehicle in the width direction from the camera installation position and direction as shown in FIG.2.

Next, vehicle position calculation section 130 finds the coordinates of points 240, 250, and 260 at identical vertical-direction positions on center line 210, and left boundary line 220 and right boundary line 230 of the traveling lane detected by lane detection section 120.

Then vehicle position calculation section 130 finds length D1 between point 240 on center line 210 and point 250 on left boundary line 220 of the traveling lane, and length D2 between point 240 on center line 210 and point 260 on right boundary line 230 of the traveling lane.

The displacement direction is left when D1<D2, no-displacement when D1=D2, and right when D2>D1, and the displacement amount is found as a proportional value calculated as |S2-S1|/2(S1+S2).

Display image generation section 140 generates lane image 300 that includes lane boundary markers 310 representing the left boundary line and right boundary line of the traveling lane, and lane center marker 320 indicating the center of the traveling lane, shown in FIG. 3A.

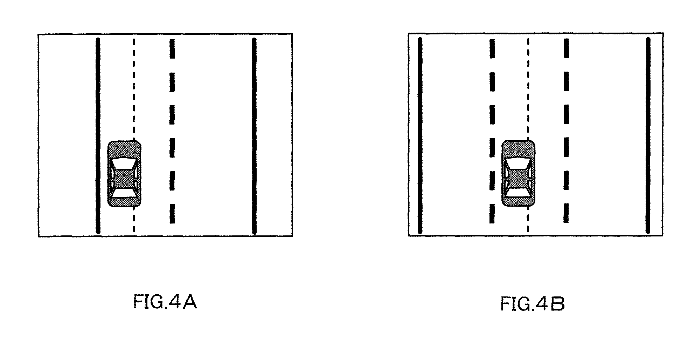

If there are a plurality of lanes, a lane image such as shown in FIG.4, for example, is generated.

FIG.4 is a drawing showing examples of display images in the case of a plurality of lanes generated by display image generation section 140 of lane keeping support apparatus 100. FIG.4A shows an example in which there are two lanes, and FIG.4B shows an example in which there are three lanes.

Next, display image generation section 140 generates a display image in which vehicle image 330 representing the vehicle is superimposed on lane image 300, as shown in FIG.3B.

At this time, vehicle image 330 is positioned horizontally displaced by length L leftward from lane center marker 320. Here, the displacement direction is calculated by vehicle position calculation section 130 (FIG.3B shows a case in which the displacement direction is left), and length L is a length calculated by multiplying length X between the left and right boundary lines of lane boundary markers 310 by a displacement amount calculated by vehicle position calculation section 130.

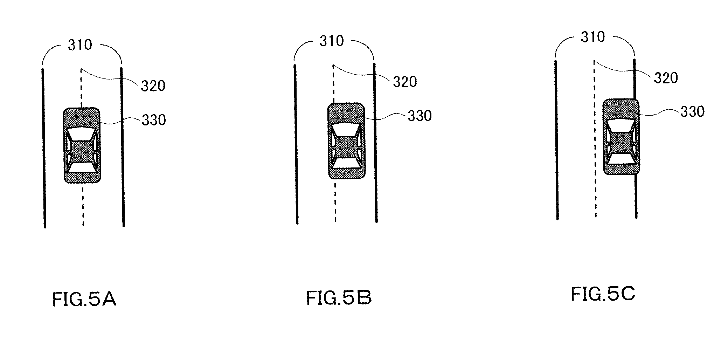

FIG.5 is a drawing showing display section 150 display images generated by display image generation section 140. FIG.5A shows an example of a display image when traveling along the center of a lane, and FIGs. 5B and 5C show examples of display images when traveling to the right-of-center of a lane.

In an example of conventional technology, for instance, no notification is given in cases such as those in FIGs.5A and 5B, in which a vehicle is traveling while deviating in a certain direction but not to the extent of departing from a lane. In particular, a driver who does not have a feel for the width of the vehicle, such as an inexperienced driver, does not know what degree of evasion is appropriate in order to avoid contact with an oncoming vehicle or a vehicle parked at the side of the road, and feels anxious. In contrast, in the present embodiment, lane boundary markers 310, lane center marker 320, and vehicle image 330 are displayed as shown in FIG.5, enabling the driver to easily confirm the traveling position of his or her vehicle within a lane.

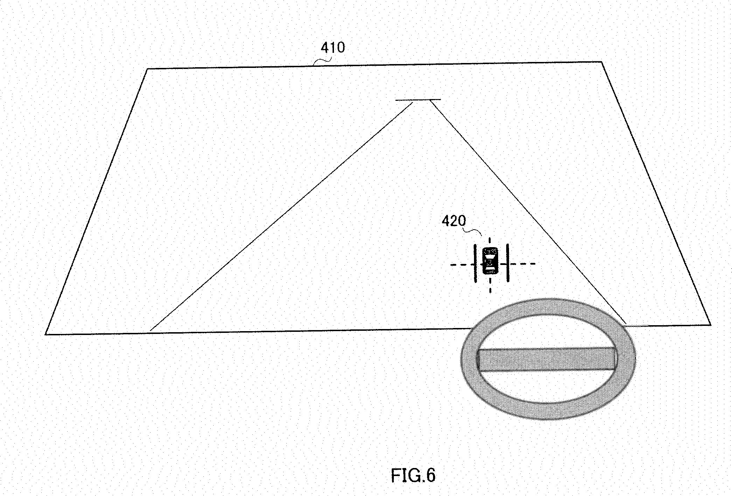

FIG.6 is a drawing showing how display image 420 is displayed on windshield 410 by display section 150. By this means, the driver can easily grasp the position of the vehicle with respect to the traveling lane while driving, making it possible to correct the position of the vehicle.

As described in detail above, lane keeping support apparatus 100 of the present embodiment is provided with lane detection section 120 that detects the left and right edges of a traveling lane in which a vehicle is traveling from a captured image, vehicle position calculation section 130 that calculates a displacement direction and displacement amount of the vehicle in the lane width direction with respect to the center of the lane in which the vehicle is traveling, and display image generation section 140 that generates a display image in which, in a lane image that includes lane boundary markers 310 indicating the left and right edges of a lane and lane center marker 320 indicating the center of the traveling lane, vehicle image 330 is superimposed with its center displaced in the lane width direction from the lane center marker 320 position in accordance with the displacement direction and displacement amount calculated by vehicle position calculation section 130.

As shown in FIG.5, display section 150 displays a display image in which vehicle image 330 is positioned in a lane image displaced according to a displacement direction and displacement amount in the lane width direction with respect to the center of the traveling lane. Showing the driver the position of the vehicle within a lane enables the driver to see at a glance where in the lane the vehicle is traveling, and enables anxiety as to whether or not there is a sufficient margin of width to avoid an oncoming vehicle or a vehicle parked at the side of the road to be eliminated. Furthermore, the driver can easily perform an operation so that the vehicle travels along the center of the lane, and can grasp the margins of width on the left and right of the lane.

Also, in the present embodiment, displaying a display image on the windshield by means of a head-up display enables the driver to confirm the view ahead while simultaneously viewing the display image, and to grasp the position of the vehicle and the view ahead in an associated fashion, enabling the driver to get a better feel for the width of the vehicle.

(Embodiment 2)

Embodiment 2 is an example in which an appropriate speed marker is also displayed.

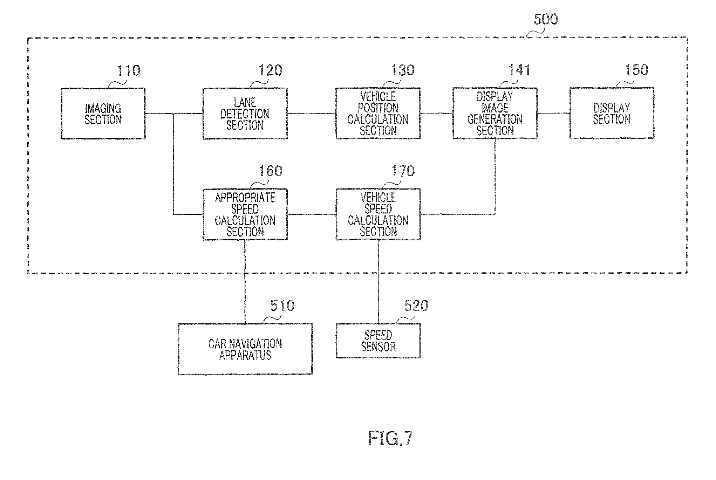

FIG.7 is a block diagram showing the configuration of a driving support apparatus according to Embodiment 2 of the present invention. Configuration parts in FIG.7 identical to those in FIG.1 are assigned the same reference numbers as in FIG.1, and duplicate descriptions thereof are omitted here.

As shown in FIG.7, lane keeping support apparatus 500 comprises imaging section 110, lane detection section 120, vehicle position calculation section 130, appropriate speed calculation section 160, vehicle speed calculation section 170, display image generation section 141, and display section 150.

Appropriate speed calculation section 160 calculates appropriate speed Vr based on speed limit information relating to the road being traveled and the road environment. For example, appropriate speed calculation section 160 calculates a maximum legal speed from information on the type of road being traveled acquired from car navigation apparatus 510 or the like, and sets a value obtained by multiplying the maximum legal speed by a predetermined factor (for example, 0. 8) as appropriate speed Vr.

If appropriate speed calculation section 160 recognizes a road sign or road marking specifying a maximum speed from an image captured by imaging section 110, appropriate speed calculation section 160 takes a value obtained by multiplying the recognized specified maximum speed by a predetermined factor (for example, 0. 8) as appropriate speed Vr. Also, if, as a road environment, appropriate speed calculation section 160 detects a curve ahead by means of a method such as recognizing a road sign or road marking indicating a curve in a captured image, or detects a wet or icy road surface by means of a raindrop sensor, reflection of the road surface in a captured image, or the like, appropriate speed calculation section 160 may lower appropriate speed Vr.

Vehicle speed calculation section 170 compares vehicle speed Vo acquired from speed sensor 520 or the like and appropriate speed Vr calculated by appropriate speed calculation section 160, and calculates Vo-Vr, the relative speed of the vehicle with respect to the appropriate speed.

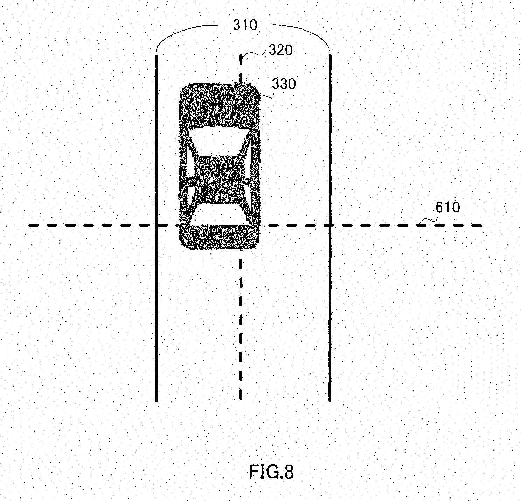

Display image generation section 141 generates a lane image comprising a lane center marker indicating the center of the traveling lane, and an appropriate speed marker positioned so as to be perpendicular to lane boundary markers indicating the left and right edges of the traveling lane or the lane center marker. Then display image generation section 141 generates a display image in which a vehicle image is positioned in the lane image with the center of the vehicle displaced according to the displacement direction and displacement amount in the lane width direction with respect to the center of the traveling lane of the vehicle calculated by vehicle position calculation section 130, and displaced in a front-back direction of the lane from the appropriate speed marker 610 (FIG.8) position according to the relative speed of the vehicle with respect to the appropriate speed calculated by vehicle speed calculation section 170.

FIG.8 is a drawing showing a display section 150 display image generated by display image generation section 141, and shows an example of a case in which a vehicle is traveling at a speed faster than an appropriate speed to the left-of-center of a lane.

Thus, according to the present embodiment, lane keeping support apparatus 500 is provided with appropriate speed calculation section 160 that calculates an appropriate speed using speed limit information relating to the road a vehicle is traveling, and vehicle speed calculation section 170 that calculates the relative speed of the vehicle with respect to the appropriate speed calculated by appropriate speed calculation section 160. Display image generation section 141 displays a display image in which a vehicle image is positioned in the lane image with the center of the vehicle displaced according to the relative speed of the vehicle with respect to the appropriate speed in addition to the displacement direction and displacement amount in the lane width direction with respect to the center of the traveling lane, producing an effect of enabling the driver to see at a glance the traveling position and speed of the vehicle within the lane, and to control the traveling position while also adjusting the speed when operating on a curve or the like, thereby facilitating lane keeping.

In the present embodiment, appropriate speed calculation section 160 and vehicle speed calculation section 170 are combined with lane keeping support apparatus 100 in FIG.1, but it is also possible for appropriate speed calculation section 160 and vehicle speed calculation section 170 to be applied individually to a driving support apparatus.

(Embodiment 3)

Embodiment 3 is an example in which a position at which an obstacle is avoided is also displayed.

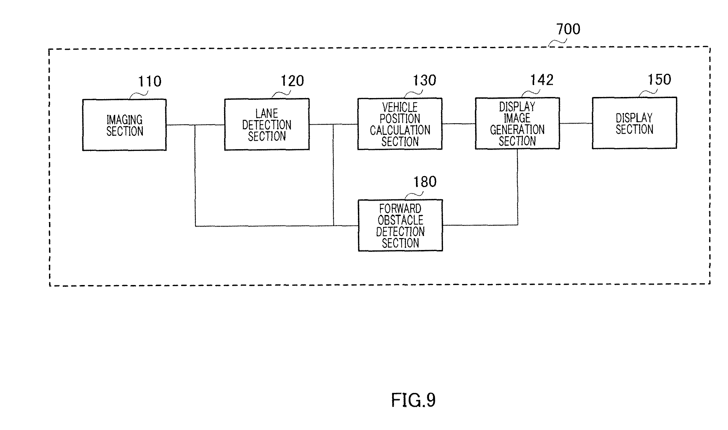

FIG.9 is a block diagram showing the configuration of a driving support apparatus according to Embodiment 3 of the present invention. Configuration parts in FIG.9 identical to those in FIG.1 are assigned the same reference numbers as in FIG.1, and duplicate descriptions thereof are omitted here.

As shown in FIG.9, lane keeping support apparatus 700 has a configuration that includes imaging section 110, lane detection section 120, vehicle position calculation section 130, forward obstacle detection section 180, display image generation section 142, and display section 150.

In the event of detecting an obstacle such as a bicycle traveling in the vicinity of the traveling lane, or a stationary vehicle or oncoming vehicle protruding into the traveling lane, forward obstacle detection section 180 notifies display image generation section 142 of the position of the obstacle in the lane width direction. Forward obstacle detection section 180 detects an obstacle or the like outside the vehicle based on an image captured by an extra-vehicle imaging camera and extra-vehicle radar output, for example.

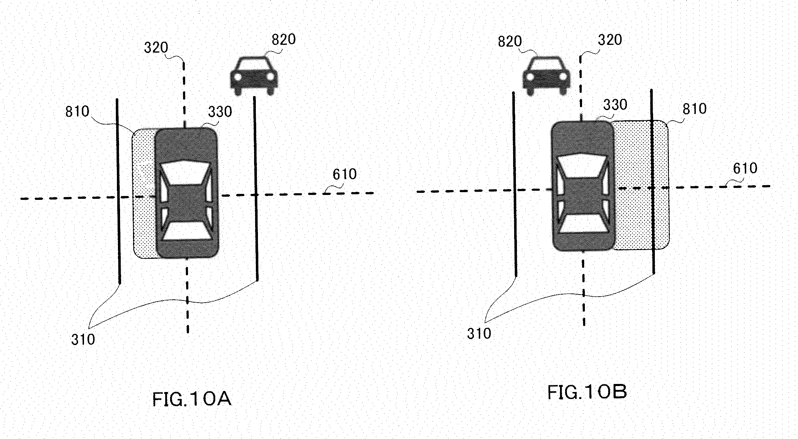

Display image generation section 142 generates a lane image comprising a lane center marker indicating the center of the traveling lane and lane boundary markers indicating the left and right edges of the traveling lane. Then display image generation section 142 generates a display image in which recommended traveling position marker 810 (FIG. 10) is superimposed on a lane image, and also a vehicle image is positioned in the lane image with the center of the vehicle displaced according to the displacement direction and displacement amount in the lane width direction with respect to the center of the traveling lane of the vehicle calculated by vehicle position calculation section 130. If there is notification of an obstacle such that the center overlaps the lane center marker 320 position, this is positioned displaced in the lane width direction so as to avoid the obstacle. Obstacle marker 820 (FIG. 10) indicating an obstacle position may also be incorporated in the display image.

FIG.10 is a drawing showing display section 150 display images generated by display image generation section 142. FIG.10A shows an example of a case in which traveling to the left-of-center is recommended due to the protrusion of obstacle marker 820 representing an oncoming vehicle, and FIG.10B shows an example of a case in which temporarily traveling while protruding beyond the right edge of the lane is recommended in order to avoid obstacle marker 820 representing a vehicle parked on the left.

Thus, according to the present embodiment, lane keeping support apparatus 700 is provided with forward obstacle detection section 180 that detects an obstacle such as a bicycle traveling in the vicinity of the traveling lane, or a stationary vehicle or oncoming vehicle protruding into the traveling lane, and display image generation section 142 generates a display image that indicates a recommended traveling position according to a situation ahead in addition to and combined with a vehicle's traveling position. By this means, a driver can see at a glance in what position the vehicle should travel in order to avoid an obstacle, and can easily travel with this reflected in the operation of the vehicle.

Here, by making recommended traveling position marker 810 and vehicle image 330 the same shape, displacement can be grasped through the nature of overlapping between vehicle image 330 and recommended traveling position marker 810, enabling the support effect to be heightened. At this time, color or texture may also be changed to enable the driver to distinguish between recommended traveling position marker 810 and vehicle image 330.

(Embodiment 4)

Embodiment 4 is an example in which display is performed that makes it possible to grasp an actual situation more correctly.

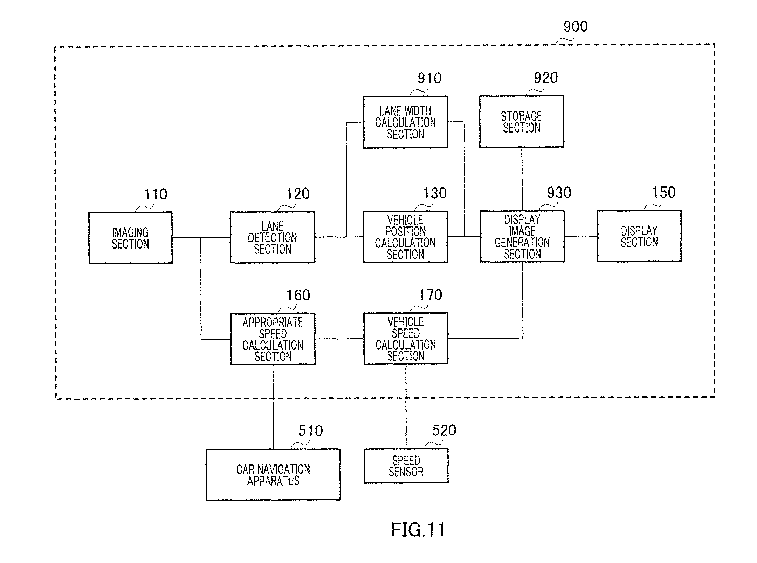

FIG. 11 is a block diagram showing the configuration of a driving support apparatus according to Embodiment 4 of the present invention. Configuration parts in FIG. 11 identical to those in FIG.7 are assigned the same reference numbers as in FIG.7, and duplicate descriptions thereof are omitted here.

As shown in FIG.11, in addition to lane keeping support apparatus 500 in FIG.7, lane keeping support apparatus 900 comprises lane width calculation section 910, storage section 920, and display image generation section 930.

Lane width calculation section 910 calculates the lane width of a traveling lane created by left and right lane boundaries in an image detected by lane detection section 120. Specifically, lane width calculation section 910 finds a three-dimensional position in a camera coordinate system using parallax for two points that are vertically identical positions on a left boundary line and right boundary line in a stereo image acquired by imaging section 110, The difference between the two points calculated by lane width calculation section 910 is the lane width of the traveling lane.

Storage section 920 stores vehicle width information and vehicle image vehicle width information.

Display image generation section 930 generates a lane image in accordance with the lane width, and then generates a display image by positioning the vehicle image.

The actual display image generation method used by display image generation section 930 will now be described.

Display image generation section 930 first calculates the display width of lane boundary markers indicating the left and right edges of the traveling lane. When the vehicle width of a vehicle image stored in storage section 920 is designated CG [Pix], the actual vehicle width of the vehicle is designated Cw [m], and the vehicle width calculated by lane width calculation section 910 is designated Lw [m], width LG [Pix] of the lane boundary markers that are part of a vehicle image is calculated by means of the following equation.

$$LG = Lw \cdot CG / Cw$$

Next, a lane center marker indicating the center of the traveling lane is positioned midway between the lane boundary markers. Furthermore, a vehicle image is generated by positioning an appropriate speed marker so as to be perpendicular to these lane boundary markers or the lane center marker.

Then display image generation section 930 generates a display image in which a vehicle image is positioned in the lane image with the center of the vehicle displaced according to a displacement direction and displacement amount in the lane width direction with respect to the center of the traveling lane of the vehicle calculated by vehicle position calculation section 130, and displaced in a front-back direction of the lane from an appropriate speed marker 610 (FIG.8) position according to the relative speed of the vehicle with respect to an appropriate speed calculated by vehicle speed calculation section 170.

By generating a display image in this way, the actual positional relationship between a vehicle and lane can be represented more correctly in the display image.

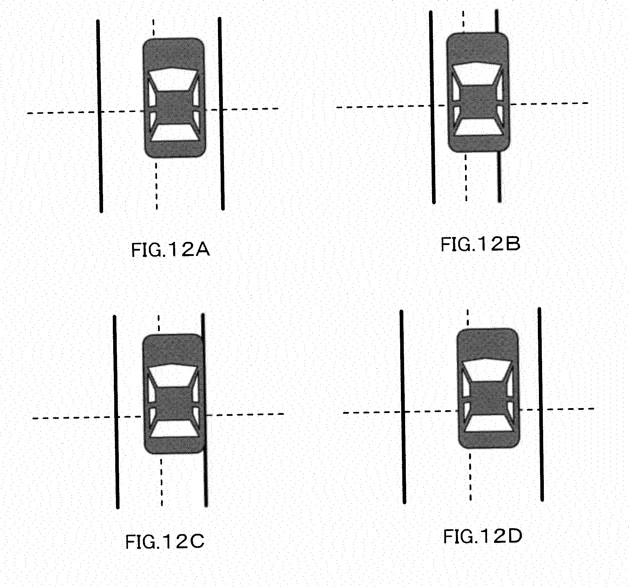

FIG.12 is a drawing showing examples in which a display section 150 display image generated by a driving support apparatus according to the present embodiment cannot be correctly grasped.

For example, when a vehicle is traveling on a comparatively wide road such as shown in FIG.12A, if the vehicle image and lane boundary marker widths are fixed as narrow, a display image is generated in which the vehicle appears to be departing from the lane, as shown in FIG.12B. Also, when a vehicle is traveling on a comparatively narrow road, if the vehicle image and lane boundary marker widths are fixed as wide, even though the vehicle is actually traveling while departing from the lane as shown in FIG.12C, a display image is generated in which the vehicle only appears to be traveling while slightly displaced from the center of the lane, as shown in FIG.12D.

Thus, according to the present embodiment, lane keeping support apparatus 900 is provided with lane width calculation section 910 that calculates a lane width, and storage section 920 that stores a lane boundary marker width standard value, vehicle image vehicle width, and actual vehicle width information. Display image generation section 930 displays a display image in which a vehicle image is positioned in a lane image displaced according to the relative speed of the vehicle with respect to an appropriate speed in addition to a displacement direction and displacement amount in the lane width direction with respect to the center of the traveling lane. In addition to this, display image generation section 930 adjusts the display width of lane boundary markers when a display image is generated. By this means, an effect is produced of enabling the driver to grasp the traveling position and speed of the vehicle within a lane more correctly, and to control the traveling position while also adjusting the speed, thereby facilitating lane keeping.

In the present embodiment, the vehicle image width is fixed and the lane boundary width is adjusted, but the lane boundary width may be fixed and the vehicle image width adjusted.

In the present embodiment, lane width calculation section 910 and storage section 920 are combined with lane keeping support apparatus 500 in FIG.7, but it is also possible for these to be applied to lane keeping support apparatus 100 in FIG.1 that does not use appropriate speed calculation section 160 and vehicle speed calculation section 170.

In the present embodiment, forward obstacle detection section 180 of lane keeping support apparatus 700 in FIG.9 has not been added, but it is of course also possible to add forward obstacle detection section 180 and include display of a recommended traveling position according to a situation ahead.

The above description presents examples of preferred embodiments of the present invention, but the scope of the present invention is not limited to these.

For example, in the above embodiments it is also possible to perform presentation in combination with another information presentation means, such as sound, speech information, or vibration, for example. Combined use of a meter display is also possible.

In the above embodiments, the terms "driving support apparatus" and "driving support method" have been used, but this is simply for convenience of description, and a term such as "lane keeping support apparatus" may also be used for an apparatus, and a term such as "vehicle information display method" for a method.

Details of configuration sections composing an above-described driving support apparatus, such as the type of a lane detection section and the superimposed image generation method of a display image generation section, for example, are not limited to those in the above embodiments.

An above-described driving support method is implemented by a program for causing this driving support method to function. This program is stored in a computer-readable recording medium.

The disclosure of Japanese Patent Application No.2009-169119, filed on July 17, 2009, including the specification, drawings and abstract, is incorporated herein by reference in its entirety.

Industrial Applicability

A driving support apparatus and driving support method according to the present invention alleviate driver anxiety by being installed in a vehicle, and are suitable for use as a driving support system that supports safe driving. They can also be applied to a use such as improving a driver's driving technique.

Reference Signs List

100, 500, 700, 900 Lane keeping support apparatus
110 Imaging section
120 Lane detection section
130 Vehicle position calculation section
140, 141, 142 Display image generation section
150 Display section
160 Appropriate speed calculation section
170 Vehicle speed calculation section
180 Forward obstacle detection section
910 Lane width calculation section
920 Storage section
930 Display image generation section

**Claims**

1. A driving support apparatus comprising:

an imaging section that images surroundings of a vehicle;
a lane detection section that detects left and right edges of a traveling lane in which the vehicle is traveling from a captured image;
a vehicle position calculation section that calculates a displacement direction and displacement amount of the vehicle in the lane width direction with respect to a center of the traveling lane;
a display image generation section that generates a display image in which, in a lane image that includes lane boundary markers indicating left and right edges of the traveling lane and a lane center marker indicating a center of the traveling lane, a center position of a vehicle image is superimposed displaced in a lane width direction from a position of the lane center marker in accordance with a displacement direction and displacement amount calculated by the vehicle position calculation section; and
a display section that outputs the display image.

2. The driving support apparatus according to claim 1, wherein a displacement amount of the vehicle in a lane width direction calculated by the vehicle position calculation section is a value calculated based on a proportion of displacement from a center of the traveling lane of a center position of a lateral width of the vehicle with respect to a width of the traveling lane.

3. The driving support apparatus according to claim 1, wherein the lane detection section detects left and right edges of a plurality of lanes that include a traveling lane of the vehicle.

4. The driving support apparatus according to claim 1, wherein the display section is a head-up display installed so that an image is displayed on a windshield.

5. The driving support apparatus according to claim 1, further comprising:

an appropriate speed calculation section that calculates an appropriate speed using speed limit information relating to a road on which the vehicle is traveling; and
a vehicle speed calculation section that acquires speed information of the vehicle, and calculates a relative speed of the vehicle with respect to the appropriate speed,
wherein the display image generation section further displays in the vehicle image an appropriate speed marker indicating an appropriate speed that is positioned so as to be perpendicular to the lane boundary markers or the lane center marker, and
generates a display image on which a position of the vehicle image is superimposed displaced in a front-back direction of the traveling lane from a position of the appropriate speed marker in accordance with a relative speed of the vehicle with respect to the appropriate speed.

6. The driving support apparatus according to claim 5, wherein the appropriate speed calculation section detects an appropriate speed based on a road environment of a road on which a vehicle travels in addition to speed limit information relating to a road on which the vehicle is traveling.

7. The driving support apparatus according to claim 1, further comprising:

a forward obstacle detection section that detects an obstacle ahead of a vehicle, and gives notification of a position of an obstacle in a lane width direction;

wherein the display image generation section superimposes a center position of a recommended traveling position marker indicating a recommended traveling position of the vehicle on the lane center marker in the vehicle image when there is no notification of an obstacle from the forward obstacle detection section; and superimposes the recommended traveling position marker on the vehicle image displaced from the lane center marker according to a position of the obstacle in a lane width direction when there is notification of an obstacle from the forward obstacle detection section.

8. The driving support apparatus according to claim 7, wherein the recommended traveling position marker is an image identical in shape to the vehicle image.

9. The driving support apparatus according to claim 7, wherein the display image generation section generates a display image that also incorporates an obstacle marker indicating a position of an image when there is notification of an obstacle from the forward obstacle detection section.

10. The driving support apparatus according to claim 1, further comprising:

a lane width calculation section that calculates a width of a traveling lane as a lane width; and a storage section that stores a lane boundary marker width standard value, vehicle image vehicle width, and actual vehicle width information, wherein the display image generation section displays the lane boundary markers with a width thereof changed according to the lane width.

11. A driving support method comprising:

a step of imaging surroundings of a vehicle; a step of detecting left and right edges of a traveling lane in which the vehicle is traveling from a captured image; a step of calculating a displacement direction and displacement amount of the vehicle in the lane width direction with respect to a center of the traveling lane; a display image generation step of generating a display image in which, in a lane image that includes lane boundary markers indicating left and right edges of the traveling lane and a lane center marker indicating a center of the traveling lane, a center position of a vehicle image is superimposed displaced in a lane width direction from a position of the lane center marker in accordance with a displacement direction and displacement amount calculated by the calculation step; and
a step of outputting a generated display image.

12. The driving support method according to claim 11, further comprising:

a step of calculating an appropriate speed using speed limit information relating to a road on which the vehicle is traveling; and a step of acquiring speed information of the vehicle, and calculating a relative speed of the vehicle with respect to the appropriate speed, wherein: the display image generation step displays in the vehicle image an appropriate speed marker indicating an appropriate speed that is positioned so as to be perpendicular to the lane boundary markers or the lane center marker, and generates a display image on which a position of the vehicle image is superimposed displaced in a front-back direction of the traveling lane from a position of the appropriate speed marker in accordance with a relative speed of the vehicle with respect to the appropriate speed.

13. The driving support method according to claim 11, further comprising:

a step of detecting an obstacle ahead of a vehicle, and giving notification of a position of an obstacle in a lane width direction; wherein the display image generation step superimposes a center position of a recommended traveling position marker indicating a recommended traveling position of the vehicle on the lane center marker in the vehicle image when there is no notification of an obstacle from the notification step; and superimposes the recommended traveling position marker on the vehicle i mage displaced from the lane center marker according to a position of the obstacle in a lane width direction when there is notification of an obstacle from the notific ation step.

14. The driving support method according to claim 11, further comprising:

a step of calculating a width of a traveling lane as a lane width; and a step of storing a lane boundary marker width standard value, vehicle i mage vehicle width, and actual vehicle width information, wherein the display image generation step displays the lane boundary markers with a width thereof changed according to the lane width.

**15.** A program that causes a computer to execute each step of the driving support method according to claim 11.

100

| 110 | 120 | 130 | 140 | 150 |
|---|---|---|---|---|
| IMAGING SECTION | LANE DETECTION SECTION | VEHICLE POSITION CALCULATION SECTION | DISPLAY IMAGE GENERATION SECTION | DISPLAY SECTION |

FIG.1

FIG.2

FIG.3B

FIG.3A

FIG.4B

FIG.4A

FIG.5A

FIG.5B

FIG.5C

FIG.6

FIG.7

FIG.8

FIG.9

FIG.10A                    FIG.10B

900

910
LANE WIDTH
CALCULATION
SECTION

920
STORAGE
SECTION

110
IMAGING
SECTION

120
LANE
DETECTION
SECTION

130
VEHICLE
POSITION
CALCULATION
SECTION

930
DISPLAY
IMAGE
GENERATION
SECTION

150
DISPLAY
SECTION

160
APPROPRIATE
SPEED
CALCULATION
SECTION

170
VEHICLE
SPEED
CALCULATION
SECTION

510
CAR NAVIGATION
APPARATUS

520
SPEED
SENSOR

FIG.11

FIG.12A

FIG.12B

FIG.12C

FIG.12D

EP 2 455 927 A1

## INTERNATIONAL SEARCH REPORT

| | International application No. |
|---|---|
| | PCT/JP2010/002980 |

**A. CLASSIFICATION OF SUBJECT MATTER**
*G08G1/16*(2006.01)i

According to International Patent Classification (IPC) or to both national classification and IPC

**B. FIELDS SEARCHED**

Minimum documentation searched (classification system followed by classification symbols)
G08G1/16

Documentation searched other than minimum documentation to the extent that such documents are included in the fields searched
Jitsuyo Shinan Koho          1922–1996    Jitsuyo Shinan Toroku Koho    1996–2010
Kokai Jitsuyo Shinan Koho    1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-104148 A  (Mazda Motor Corp.),<br>09 April 2003 (09.04.2003),<br>paragraphs [0058] to [0063]; fig. 19<br>(Family: none) | 1-3,11,15<br>4 |
| X | JP 2007-328410 A  (Mitsubishi Electric Corp.),<br>20 December 2007 (20.12.2007),<br>paragraphs [0004], [0026], [0098] to [0106]<br>(Family: none) | 1-3,11,15 |
| Y | JP 2009-104543 A  (Sumitomo Electric Industries, Ltd.),<br>14 May 2009 (14.05.2009),<br>paragraph [0041]<br>(Family: none) | 4 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 July, 2010 (26.07.10) | Date of mailing of the international search report<br>03 August, 2010 (03.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2010/002980 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-148973 A  (Nissan Motor Co., Ltd.),<br>09 June 2005 (09.06.2005),<br>entire text<br>(Family: none) | 1-15 |
| A | JP 2003-58996 A  (Takayasu SUGIYAMA),<br>28 February 2003 (28.02.2003),<br>entire text<br>(Family: none) | 1-15 |

Form PCT/ISA/210 (continuation of second sheet) (July 2009)

**EP 2 455 927 A1**

<table>
<tr><td>INTERNATIONAL SEARCH REPORT</td><td>International application No.<br>PCT/JP2010/002980</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
Since JP 2003-104148 A (Mazda Motor Corp.), 09 April 2003 (09.04.2003), paragraphs [0058] to [0063]; fig. 19 describes "a driving support device, method, and program comprising an image-capturing means, a lane detection means, a vehicle both position calculating means, a display image generating means for generating displacement images of both images of the vehicle in accordance with the displacement direction and displacement amount within the lane, and a display means," further "a driving support device comprising a means for calculating the displacement amount at the rate to the lane width," and "a driving support device comprising a means for detecting a plurality of lanes," (continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☒ No protest accompanied the payment of additional search fees.

Form PCT/ISA/210 (continuation of first sheet (2)) (July 2009)

25

| INTERNATIONAL SEARCH REPORT | International application No. |
|---|---|
| | PCT/JP2010/002980 |

Continuation of Box No.III of continuation of first sheet(2)

the inventions of claims 1-3, 11, 15 cannot be considered to have novelty with respect to the invention described in the above-mentioned JP 2003-104148 A, and have no special technical feature.
Therefore, the inventions of claims 1-15 obviously do not satisfy the requirement of unity of invention.

Form PCT/ISA/210 (extra sheet) (July 2009)

**REFERENCES CITED IN THE DESCRIPTION**

**Patent documents cited in the description**

- JP 11126300 A
- JP 11264868 A
- JP 2009169119 A